# EUROPEAN PATENT SPECIFICATION

(11) **EP 4 193 889 B1**
(45) Date of publication and mention of the grant of the patent: **04.02.2026**
(21) Application number: 21212875.5
(22) Date of filing: 07.12.2021
(51) Int. Cl.: A47J 31/44

(54) **A TAMPING DEVICE FOR COMPRESSING COFFEE POWDER, A COMPRESSING ELEMENT AND A METHOD FOR COMPRESSING COFFEE POWDER**
STOPFVORRICHTUNG ZUM VERDICHTEN VON KAFFEEPULVER, VERDICHTUNGSELEMENT UND VERFAHREN ZUM VERDICHTEN VON KAFFEEPULVER
DISPOSITIF DE TASSEMENT PERMETTANT DE COMPRIMER DE LA POUDRE DE CAFÉ, ÉLÉMENT DE COMPRESSION ET PROCÉDÉ DE COMPRESSION DE POUDRE DE CAFÉ

(43) Date of publication of application: 14.06.2023
(73) Proprietor: Senger, Alexander, 9000 St. Gallen (CH)
(72) Inventor: Senger, Alexander, 9000 St. Gallen (CH)
(74) Representative: Ramrath, Lukas

(56) References cited:
- AU-A4- 2016 100 964
- US-A1- 2004 206 243
- US-A1- 2011 100 229

## Description

The invention relates to a tamping device for compressing coffee powder, a compressing element and a method for compressing coffee powder.

Espresso as a classic coffee drink is prepared by compressing about 7 grams of freshly ground coffee into a puck in a portafilter and then infusing it with hot water at high pressure (9 bar) to extract about 30 millilitres of coffee in about 25 seconds. In order to obtain a good-tasting coffee, it is necessary that during the extraction process all the coffee grounds are covered as evenly as possible, i.e. that all parts of the puck are permeated with the same amount of water for as long as possible. An uneven extraction, in which some parts of the puck are permeated less and others more, leads on the one hand to wastage of the under-extracted portion and on the other hand to bad coffee, as components with a very unpleasant taste are released from the coffee grounds if the extraction is too intensive. Careful preparation of the coffee puck is therefore an important step in the preparation of espresso.

Since water always chooses the path of least resistance, it is essential to prepare the coffee puck with an even shape and especially an even density. Otherwise, the water flows mainly through the less dense parts during coffee preparation, which are then over-extracted. For this reason, the coffee beans are ground into a flour with a particularly well-defined grain size distribution using high-quality mills. The subsequent compaction of the coffee grounds into a puck then takes place in a coffee sieve, such as a portafilter, in which the accumulated grounds are pressed together by means of a tamper with a force of about 250 N. Ideally, this results in a compact disc-shaped puck which has a uniform density.

This process is suboptimal in the sense that the coffee grounds, as a granular medium, are not free-flowing at will, but rather the grains interlock with each other above a certain density and the compacting puck behaves more and more like a solid body that resists applied shear stresses. If the ground coffee is already homogeneously distributed at the beginning, pressing it together with a rigid tamper results in a homogeneous puck, which can then also be penetrated evenly by hot water.

If, however, the ground coffee has already been filled unevenly into the coffee sieve - as typically happens - pressing with a classic steel tamper only initially leads to a levelling of the ground coffee. As compaction increases, the coffee grains become increasingly interlocked until any shearing movement in the puck becomes impossible. This creates zones of denser packing in the coffee puck, which offer significantly greater resistance to the hot water in the extraction process. As a result, most of the water flows through the less densely packed parts of the puck with the corresponding aforementioned negative consequences. Therefore, one usually tries to fill the coffee grounds as evenly as possible into the coffee sieve and distribute them further there. There are special tools and techniques for this, but they are expensive and time consuming, and therefore are not often used.

US 2020/359827 A1 discloses an automatic coffee tamper which applies uniform pressure on coffee powder and makes flat coffee powder.

US 2004/206243 A1 discloses a hand-held, force-adjustable tamper, used to tamp, or compress coffee/espresso grounds into a filter basket of a group head assembly of an espresso machine for use during the espresso brewing or extraction process. Further disclosed are interchangeable tamping faces that allow consumers to purchase only a new tamping face rather than replacing the entire unit when in need of a different size tamper and that the tamper face can have a concave, convex, or flat shape and can be made of metal, wood, or plastic.

EP 1 658 796 A2 discloses a coffee machine and/or a method for producing a hot drink on the basis of coffee or tea and that a tamper can be provided with a wave-like structure on the surface for tamping the grounded coffee.

CH 710395 A2 discloses a brewing head for an espresso coffee machine with a connection for direct or indirect connection to a hot water reservoir and with a receptacle for a portafilter holder.

US 2011/0100229 A1 discloses coffee makers and in particular a coffee maker utilizing a stream of hot water through tamped ground coffee.

AU 2016 100 964 A1 relates to the field of production of coffee extract from coffee grind.

There is the technical problem to provide a tamping device for compressing coffee powder, a compressing element of a tamping device and a method for compressing coffee powder which allow reliable compressing while providing a more homogeneous compression of the coffee powder.

The solution to said technical problem is provided by the subject-matter with the features of the independent claims. Further advantageous embodiments are provided by the subject-matter with the features of the sub claims.

A tamping device for compressing coffee powder is proposed. The coffee powder can be coffee grounds or ground coffee. The tamping device comprises a main body and a compressing element, wherein the compressing element is formed by the main body.

In particular, the compressing element can form a portion of the main body, in particular a contact portion for contacting the coffee powder during compression. The material of the compressing element can be less rigid than the remaining material of the main body. It is, however, also possible that the compressing element is attached to the main body. In this case, the compressing element and/or the main body can have or form (an) interface(s) for attaching the compressing element to the main body, in particular in a detachable manner. The material of the compressing element can be less rigid than the material of the main body. It is, however, also possible that the tamping device comprises a mounting element for mounting the compressing element to the main body. In this case, the mounting element and/or the main body can have or form (an) interface(s) for attaching the mounting element to the main body, in particular in a detachable manner. It is further possible that the mounting element and/or the compressing element can have or form (an) interface(s) for attaching the compressing element to the mounting element, in particular in a detachable manner. The mounting element can also have or form a receiving section for receiving the compressing element. The compressing element can then be attached to the main body by arranging the compressing element in said receiving section and/or by attaching the compressing element to the mounting element and then attach the mounting element to the main body. The compressing element can be formed at or attached to a free end of the main body. In particular, the compressing element can provide the free end section if formed by the main body or if attached to it.

An aforementioned interface for a mechanical connection can e.g. provide a form-locked and/or frictional connection, e.g. a click-on connection, a clamping connection, a screw connection and the like.

At least the compressing element, preferably however also the main body and/or the mounting element (if present) can be made of material suitable for the contact with food. The main body and the mounting element can e.g. be made of metal, plastic or wood or a mixture of at least two of these materials. Example materials of the compressing element will be explained in the following. Geometric characteristics, in particular a diameter, of the compressing element or the entity of mounting element and compressing element can be adapted to geometric dimensions of a portafilter in which the coffee powder is arranged for compression. A possible range of diameters of the portafilter comprises values between 35 mm (inclusive) to 65 mm (inclusive). The diameter of the compressing element can then be chosen such that the compressing element can be inserted into the coffee powder receiving section of the portafilter but also covers as much volume of the receiving section as possible. As an example, the diameter of the compressing element can be smaller than the full open diameter of the used portafilter, wherein the diameter difference can take values from an interval of 0 mm (exclusive) to 4 mm (inclusive).

The compressing element forms or comprises at least a part of a contact surface for contacting the coffee powder during a compressing procedure. It is possible that the compressing element forms or comprises the complete contact surface.

According to the invention, at least a first portion of the contact surface is deformable, in particular elastically deformable. It is possible that the complete contact surface is deformable. This can mean that a curvature of a deformable portion of the contact surface is variable, in particular in a predetermined range. The minimum value of a radius of curvature of an osculating circle or sphere having the same curvature as the curvature of the contact surface at a selected point on the surface of the deformable portion can be 1 mm which means that the radius can take values in the range from said minimum value to infinity (corresponding to a flat surface). The deformable portion can be deformable such that a convex curved contact surface is provided. Moreover, a hardness of the deformable portion of the contact surface can be can be smaller than the Shore hardness of rigid materials such as metal, in particular steel or aluminium, and/or wood and/or rubber. The hardness can be measured by known hardness tests, e.g. a hardness test according to Brinell (e.g. defined in the standard EN ISO 6506-1 to EN ISO 6506-4, according to Vickers (e.g. defined in the standard DIN EN ISO 6507-1:2018 to -4:2018), according to Knopp (e.g. defined in the standard DIN EN ISO 4545-1 to -4:) or preferably according to Shore (e.g. defined in the standard DIN EN ISO 868, DIN ISO 7619-1 and ASTM D2240-00). According to the invention, the Shore hardness of the deformable portion of the contact surface is lower than or equal to Shore 000 100 and optionally higher than or equal to Shore 000 5, wherein "000" denotes the Shore scale according to which the hardness is defined.

Moreover, the shear modulus of the material of the compressing element, in particular at the deformable contact surface, can be lower than the shear modulus of the aforementioned rigid materials, in particular at room temperature or at any other selected temperature, e.g. 20°C. It is possible that the shear modulus of the deformable portion of the contact surface is lower than the shear modulus of rigid materials such as metal, in particular steel or aluminium, and/or wood and/or rubber. It is also possible that the shear modulus is lower than 100 kPa or lower than 10 kPa or even lower than 1 kPa.

Advantageously, the deformable contact surface or portion of the contact surface allows to provide a reliable compressing of the powder while providing a more homogeneous compression of the coffee powder. Instead of a rigid compressing element, a deformable compressing element is used. The deformable compressing element or at least a part thereof can be made of a shear-soft material. When tamping with the proposed tamping device, the soft coffee powder is first displaced and pressed together. This process is similar to tamping with a rigid contact surface of a conventional tamper as long as the shearing force exerted by the deformable contact surface on the coffee powder clearly outweighs the shear resistance of the loose coffee grounds. As the increasingly compressed ground coffee hardens, however, the shear resistance in the coffee powder will dominate and the flexible contact surface adapts to the surface of the puck of compressed coffee powder. In such a state, the shear stresses in the compressing element can be neglected compared to those in the coffee puck. Now, a uniform pressure can be exerted by the (deformed) compressing element on the puck surface and thus leads to a uniform further compression of the puck, in particular if the compressing element is designed according to the hydrostatic principle/to provide a hydrostatic effect which is e.g. the case if the compressing element is at least partially or completely made of an incompressible material or of a compressible material arranged within an enclosed volume.

In contrast, when tamping with a rigid compressing element, the pressure is unevenly exerted on the surface of the puck: the parts of the coffee flour that are already more compressed bear more and more of the load, while the parts that are not yet sufficiently compressed only experience a small amount of pressure. This uneven distribution cannot be compensated for by increasing the contact pressure, as the compressed puck clumps more with increasing load and offers ever greater resistance to further deformation. With the proposed tamping device, however, the deformability of the compressing element results in a uniform pressure load despite the hardening of the puck and thus a more even compression process. As a result, the puck is much more uniform in its density and thus allows to produce a better coffee because of the more uniform extraction. For the user, the tamping process does not differ from that with a rigid compressing element. In particular, no complex preparatory work or additional tools are necessary.

In a further embodiment, the compressing element is a material-filled element, wherein at least a contact section of the material-filled element is deformable. The material-filled element can comprise a shell which encloses the fill material fully or at least partially. The shell or at least a section of the shell can provide the contact section. The shell can prevent the fill material from contacting the coffee powder, in particular during compression. As outlined before, at least the shell but preferably also the fill material is suitable to contact food. The compressing element can e.g. be a cushion-like element. The shell can be made of elastic material. A simple example is a rubber-like, thin shell filled with a practically incompressible fluid, e.g. water or oil.

To avoid an undesired deformation of the compressing element in a state in which no pressure is exerted on the compressing element, it is possible to provide the shell such that an elasticity is varied in different sections of the shell. It is e.g. possible that the shell is designed to be more elastic in the section providing the contact surface than the remaining section or at least one subsection of the remaining section. If the compressing element is cylindrical or essentially cylindrical, it is possible that an elasticity of the end surface providing the contact surface is higher than the opposite end surface which e.g. abuts or is attached to the main body. The undesired deformation can be a rounded, drop-like shape of the compressing element when it is not under pressure. If such a compressing element is pressed into the loose coffee powder, the powder is initially displaced by the compressing element, as the loose powder cannot build up a counterforce to the compressing force of the compressing element. This bears the risk of creating a dent in the powder, which is solidified as the pressure increases and the powder compacts. The resulting puck has a very uneven thickness, which is detrimental to the uniform extraction of coffee.

Advantageously, providing the compressing element as a material-filled element allows a simple and inexpensive manufacturing of the compressing element while providing desired mechanical characteristics such as the deformability.

In a further embodiment, the compressing element is at least partially made of liquid material, In particular, the compressing element can be at least partially or fully filled with a liquid material. If the compressing element is only partially filled with a liquid material, a remaining fill material can e.g. be a solid material, in particular a solid material which is deformable. A viscosity of the liquid material can be equal to or higher than the viscosity of water at room temperature or any other selected temperature, e.g. 20°C. The viscosity can e.g. be measured by a viscometer (e.g. according to the standard EN ISO 3219). It is e.g. possible that the viscosity of the liquid material is higher than or equal to 0,5 mPa·s and/or lower than or equal to 10000 mPa·s.

Making the compressing element out of liquid material advantageously allows a simple and inexpensive manufacturing of the compressing element while providing desired mechanical characteristics such as the deformability.

In a further embodiment, the liquid material is a gel-like material. A gel-like material can be a viscoelastic material that exhibit both viscous and elastic characteristics when undergoing deformation. In general, a gel-like material can be an incompressible material, e.g. a material with a bulk modulus higher than or equal to the bulk modulus of oil or water, and/or an elastic material, e.g. a material with an modulus of elasticity lower than or equal to the modulus of rubber, and/or a material with a shear modulus as outlined above. PU gels with hardnesses on the Shore scale 000 of 10 to 30 have proved successful. Such a soft fill material essentially retains a selected shape (e.g. a cylinder shape) of the compressing element under its own weight and also makes the compressing element return to its original shape after elastic deformation. At the very beginning of tamping, the low shear strength of the fill material is also sufficient to at least partially compensate for a build-up of coffee, i.e. levelling the coffee powder, by displacing the powder. With increasing pressure and increasing compactification of the powder, the shear strength in the coffee puck quickly becomes much greater than the shear strength in the fill material of the compressing element. Then, however, the fill material behaves in a good approximation like a liquid with the small necessary displacements, so that the hydrostatic principle with a homogeneous pressure distribution in the compressing element is guaranteed.

Advantageously, providing the fill material as a gel-like material allows to reliably provide the desired mechanical characteristics of the compressing element in a simple manner.

In a further embodiment, the compressing element is at least partially or fully made of a deformable solid material. In particular, the compressing element can be at least partially or fully filled with a deformable solid material. If the compressing element is only partially filled with a solid material, a remaining fill material can be a liquid material. The deformable solid material can feature one or more of the aforementioned characteristics outlined with respect to the deformable surface (portion). Making the compressing element out of a solid material also allows a simple and inexpensive manufacturing of the compressing element while providing desired mechanical characteristics such as the deformability.

In a further embodiment, the solid material is a foamed material. The foamed material can have a gas-filled, in particular air-filled, matrix structure. The foam material can be an open-cell foam, a closed-cell foam, a foam with a mixed open and closed cell structure or an integral foam. An open-cell foam advantageously allows a simple and reliable impregnation of the foam with a liquid in order to provide the desired mechanical characteristics of the compressing element. A closed-cell foam advantageously prevents coffee powder from penetrating into the compressing element if contacted by the foam. A mixed structure and an integral foam advantageously combine both of said advantages. Making the compressing element out of a foam material also contributes to the simple and inexpensive manufacturing of the compressing element while providing desired mechanical characteristics such as the deformability.

In a further embodiment, the solid material, in particular the foam material, is a material impregnated with a liquid material, in particular the liquid material as outlined before. In other words, the solid material can be soaked with the liquid material. In this case, the solid material can be at least partially provided by an open-cell foam which allows to replace the air in the air-filled structure by the liquid. Impregnating the solid material with a liquid material advantageously allows to reliably provide the desired mechanical characteristics of the compressing element in a simple and inexpensive manner, i.e. to combine the advantageous mechanical properties of a liquid fill material with and low manufacturing cost of foam material. In particular, such a compressing element can behave similar to a compressing element filled with liquid: the soft foam material core ensures that the compressing element adopts a predetermined shape if no pressure is exerted onto the compressing element. During tamping, the stiffness of the foam core is negligible compared to that of the compacted coffee powder. The incompressible liquid in and around the foam core ensures that the pressure in the cushion is the same everywhere.

If the compressing element is at least partially made of a liquid or a solid deformable material, a cushion-like compressing element can be provided which can be arranged in a pocket-like receiving section of the main body or attached to the main body. The cushion can have an elastic casing. The cushion, in particular the elasticity of the shell and/or the shearing characteristics of the fill material, e.g. a non-ideal liquid material, can be designed such that shearing forces exerted on the coffee powder exceed the shearing resistance until a certain compression or density of the powder is reached. Then, in a further compression, the shearing forces exerted by the coffee powder on the compressing element will exceed the shearing resistance of the compressing element. Also, the cushion confined by the coffee powder and the wall elements defining the pocket will feature a homogeneous and isotropic internal pressure leading to the uniform exertion of pressure onto the puck in the deformed state.

A gas would also be conceivable for filling the deformable compression element.

In a further embodiment, different portions of the contact surface have different deformation characteristics. If the compressing element comprises a shell, different sections of the shell can have different deformation characteristics. This advantageously allows to adapt the compressing element to a shape of the coffee powder in a portafilter before the tamping is carried out, i.e. the shape provided after the coffee powder has been poured into the portafiler. It is possible that coffee powder is accumulated in a centre region of the portafilter, e.g. has a cone-like shape. In other words, it is possible that different regions of the coffee powder receiving volume of the portafilter have different fill levels with respect to coffee powder. By providing different deformation characteristics for different portions of the contact surface, it is e.g. possible to improve the levelling of said different fill levels during compression. If e.g. a fill level of the centre region of the receiving volume of the portafilter with respect to coffee powder is higher than the fill level in the peripheral region, the compressing element can be designed and/or be configured such that a centre portion of the contact surface is less deformable than a peripheral portion of the contact surface. In this case, the centre portion can denote a portion of the contact surface which contacts the coffee powder arranged in the centre region and the peripheral portion can denote a portion of the contact surface which contacts the coffee powder arranged in the peripheral region during compression. Due to this, the coffee powder in the centre region will be displaced to the peripheral region to a larger extent before the aforementioned shear forces in the coffee powder exceed the shear forces of the compressing element in the centre portion of the contact surface during compression which advantageously ensures that the unlevelled arrangement of coffee powder will be levelled out to a higher extend.

In a further embodiment, a further portion of the contact surface is less deformable than the first portion. This and corresponding advantages have been explained before. The further portion can e.g. be a centre portion of the contact surface, wherein the first portion can be a peripheral portion of the contact surface. Less deformable can mean that the hardness and/or a shear modulus of the less deformable portion is higher than the hardness of the remaining portion. It is also possible that the further portion is not deformable, e.g. has the hardness and/or a shear modulus of metal, wood and/or plastic.

In a further embodiment, the further portion is provided by a section of the main body or by a section of a mounting element for mounting the compressing element to the main body. It is possible that the compressing element has or forms a through-hole through which the main body or the mounting element extends, in particular to provide a centre portion of the contact surface. It is further possible that the main body and/or the mounting element provides a peripheral portion of the contact surface, e.g. by extending along a side of the compressing element.

In a further embodiment, the compressing element is a cylindrical element. Non-rotationally symmetrical shapes of the compressing element (e.g. with a square base) are also conceivable. In particular, the compressing element can be an annular element. Alternatively, the compressing element is a cuboid element. An annular element can e.g. have the shape of a torus. A cross sectional area of the torus in a section plane perpendicular to a (circular) centre line of the torus can have a circular or rectangular shape.

Generally, the shape and/or dimensions of the compressing element can be adapted to the shape and/or dimension of the portafilter, in particular the receiving volume of the portafilter. A cylindrical and cuboid element advantageously simplifies the manufacturing of the compressing element. An annular element advantageously provides a through-hole through which a portion of the main body or the mounting element can extend.

In a further embodiment, the main body has a receiving section for receiving the compressing element or at least a part thereof. The receiving section can be provided by an inner volume of a hollow portion of the main body which can be a hollow cylindrical or hollow cuboid portion. The hollow portion can be open to one side in order to arrange the compressing element into the inner volume. The receiving section can form a pocket. The receiving section can be designed such that the compressing element is only partially arrangeable in the receiving section. If the compressing element is arranged in the receiving section, a part of the compressing element can extend out of the receiving section. This part can provide the contact surface. Advantageously, this allows a stable arrangement of the compressing element.

It is, however, also possible, to attach the compressing element to a mounting surface of the main body, e.g. by gluing it to said mounting surface. In this case, the compressing element is not encased by the main body, not even partially.

Alternatively, a mounting element for mounting the compressing element to the main body is mounted to the main body. Using a mounting element also allows a stable arrangement of the compressing element. The mounting body can have a receiving section for receiving the compressing element or at least a part thereof. As the receiving section of the main body it can be provided by an inner volume of a hollow portion of the mounting element which can be a hollow cylindrical or hollow cuboid portion. The hollow portion can be open to one side in order to arrange the compressing element into the inner volume. It is possible that both, the main body and the mounting element each have a receiving section for receiving a part of the compressing element. As mentioned before, the mounting element can have an interface section for mounting it to the main body. Said interface section can be provided by a threaded section of the mounting element, in particular a female threaded section. Also the main body can have an interface section of mounting the mounting element to the main body. This section can also be provided by a threaded section, e.g. a male threaded section. The mounting element can e.g. be a hollow cylindrical element which has or forms a threaded section at a first end and which has or forms a receiving section at a second end of the mounting element. It is further possible that the mounting element comprises or forms at least one support element for the compressing element, e.g. with a support surface which extends from an inner shell surface into the inner volume. The support element can e.g. be designed as an edge element or step element. This at least one support element can provide the limit between the receiving section and the threaded section.

It is further possible that the compressing element has or forms at least one bar element extending or protruding from an outer surface of the compressing element, in particular along a direction parallel to the contact surface in an undeformed state. The at least one bar element can e.g. provide a clamping element in order to clamp the compressing element to the main body. It is in particular possible to arrange the compressing element in the inner volume of the mounting element such that the at least one bar element of the compressing element is pressed/clamped against the main body by the at least one bar element of the mounting element if the mounting element is screwed onto the main body by means of the aforementioned threaded sections. This advantageously allows a stable but detachable fixation of the compressing element to the main body which allows a cost-effective replacement and/or easy cleaning of the compressing element.

In a further embodiment the receiving section is designed as a recess in the main body or the mounting element. A recess can be a recess within an outer surface of the main body/mounting element. This advantageously allows a stable arrangement of the compressing element on/in the main body or the mounting element.

In a further embodiment, the tamping device has an operating section for a manual operation of the tamping device which can be made of rigid, non-deformable material. An operating section can e.g. by provided by a handle which is formed by the main body or attached to main body, in particular in a detachable manner in order to allow replacement of the handle. This advantageously allows to operate the proposed tamping device by hand.

Alternatively, the tamping device has a mounting interface for mounting the main body to a compressing device, in particular in a detachable manner. The compressing device can e.g. be a hydraulic or pneumatic compressing device which generates a compressing force and actuates the tamping device accordingly. It is, however, also possible to use any other type of compressing device, e.g. an electrically operated compressing device such as a linear machine or the like. Said mounting interface can be at least partially provided by a threaded section. This advantageously allows to attach the proposed tamping device to a compressing device which generates the compressing force.

Further proposed is a compressing element for a tamping device for compressing coffee powder, in particular a tamping device according to one of the embodiments described in this disclosure. The compressing element is attachable to a main body of the tamping device, i.e. configured such that it can be attached to the main body. It is possible that the compressing element has means for attaching it to the main body. Further, the compressing element can be attachable to the main body in an exchangeable manner, e.g. in a detachable manner.

As described before, the compressing element forms or comprises at least a part of a contact surface for contacting the coffee powder during a compressing procedure, in particular when attached to the main body. Further, at least a first portion of the contact surface is deformable. The proposed compressing element can have one or more features of the compressing element of the tamping device as described in this invention, i.e. be designed according to one of the embodiments described in this disclosure. This advantageously allows to provide a compressing element allowing the reliable compressing of the powder while ensuring a more homogeneous compression of the coffee powder. Such a compressing element can e.g. be provided as a replacement element.

Further proposed is a method for compressing coffee powder with a tamping device according to one of the embodiments described herein. The method comprises the steps of
- arranging coffee powder in a receiving device for receiving coffee powder, e.g. a portafilter,
- contacting the coffee powder with the contact surface of the tamping device,
- applying a compressing force on the tamping device such that the coffee powder is compressed.

As explained before, the force can be applied by hand or by a compressing device. As also explained before, the use of the proposed tamping device to compress coffee powder allows a homogeneous compression of the coffee powder and therefore improves the quality of the coffee produced with this compressed coffee powder.

The present invention is described with reference to the accompanying figures, whereby
- Fig. 1: is a sectional view of an embodiment of a tamping device according to the present invention;
- Fig. 1-A: is an exploded sectional view of a further embodiment of a tamping device according to the present invention;
- Fig. 2: is a sectional view of a further embodiment of a tamping device according to the present invention;
- Fig. 3: is sectional view of a further embodiment of a tamping device according to the present invention
- Fig. 4: is a sectional view of a further embodiment of a tamping device according to the present invention;
- Fig. 5: is a sectional view of an embodiment of a compressing element according to the present invention;
- Fig. 6: is a sectional view of a further embodiment of a compressing element according to the present invention;
- Fig. 7: is a sectional view of a further embodiment of a compressing element according to the present invention;
- Fig. 8: is a sectional view of an embodiment of a tamping device during a compressing procedure according to the present invention;
- Fig. 9: is a block diagram of a method for compressing coffee powder with a tamping device according to the present invention;
- Fig. 10-A: is a sectional view of unevenly distributed coffee powder in a receiving device and a state of the art tamping device compressing the coffee powder and water permeating through the compressed coffee non-uniformly;
- Fig. 10-B: is a sectional view of evenly distributed coffee powder in a receiving device and a state of the art tamping device compressing the coffee powder and water permeating through the compressed coffee uniformly; and
- Fig. 10-C: is a sectional view of unevenly distributed coffee powder in a receiving device and of a further embodiment of a tamping device according to the present invention compressing the coffee powder and water permeating through the compressed coffee uniformly;

In the following, the same reference numerals describe the same or similar technical elements or features.

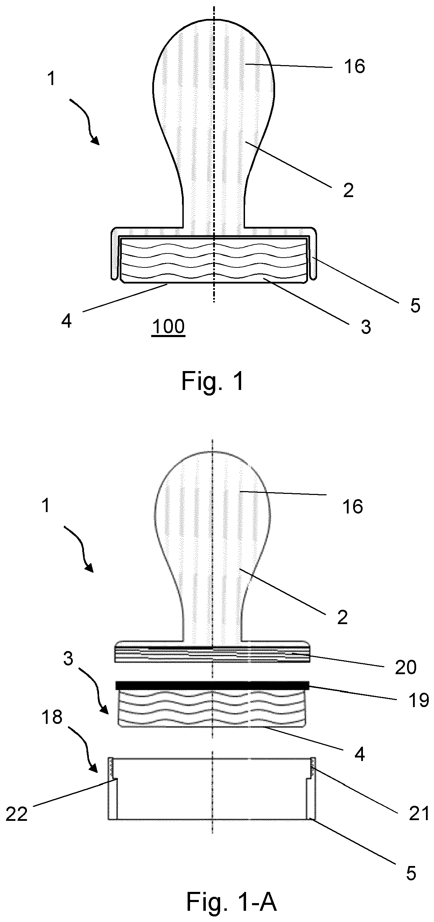

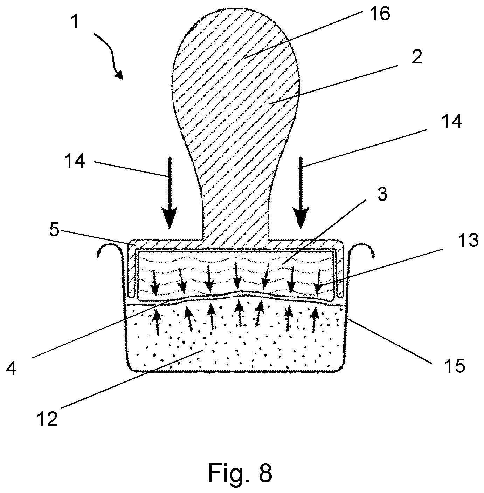

Fig. 1 shows a sectional view of a first embodiment of a tamping device 1. The tamping device 1 comprises a main body 2 with an operating section 16 for manual operation, wherein the operating section 16 is designed as or provided by a handle. The tamping device 1 further comprises a cylindrical compressing element 3. The compressing element 3 is mounted to a receiving section 5 of the main body 2, wherein the receiving section 5 is designed as a recess for receiving the compressing element 3. Along a central longitudinal axis of the main body, the recess is provided at a free end of the main body 2 which is arranged opposite to the operating section 16. The recess is provided by a cup-shaped section of the main body 2 which is open to one side in order to receive the compressing element 3. A side wall and a base of the cup-shaped section, i.e. the section of the main body 2 providing the receiving section 5, are formed by the main body 2, i.e. the main body 2 and the side wall and base are formed integrally. The compressing element 3 can be attached, e.g. bonded to the receiving portion 5, in particular to the inner surface of the side wall and/or the surface of the base, e.g. by means of an adhesive (not shown). The compressing element 3 forms a contact surface 4, wherein the contact surface 4 is exposed to the surroundings 100 and is deformable. The deformable contact surface 4 is used for contacting the coffee powder during a compressing procedure (see Fig. 8). In the embodiment shown in Fig. 1, the compressing element 3 is a cylindrical element. The cylindrical element is inserted into the receiving section 5. The compressing element 3 and the receiving section 5 are designed such that a section of the compressing element 3 protrudes from the receiving section 5, i.e. extends beyond the outer end surface of the receiving section 5, i.e. the outer end surface of the side wall. By providing said extending section, less limitation of the deformation of the contact surface 4 can be achieved.

In Fig. 1-A, an exploded sectional view of a further embodiment of a tamping device 1 is shown. The tamping device 1 comprises a main body 2, a compressing element 3, as well as a mounting element 18 for mounting the compressing element 3 to the main body 2. The main body 2 forms a mounting section 20 with a male thread. Along a central longitudinal axis of the main body 2, this mounting section 20 is provided at a free end of the main body 2 which is arranged opposite to the operating section 16.

The compressing element 3 has a cylindrical shape with one of the end surfaces having a slightly larger diameter than the remaining part of the compressing element 3 thereby forming a protruding resting element 19. The mounting element 18 has an annular or hollow-cylindrical shape. Further, the mounting element 18 has threaded section with a female thread 21 for screwing the mounting element 18 to the mounting section 20 of the main body 2. The diameter of the resting element 19 is less than an inner diameter of the female thread 21 of the mounting element 18. The mounting element 18 also has a receiving section 5 for receiving the compressing element 3 or the most part thereof. The diameter of the resting element 19 is larger than an inner diameter of said receiving section 5 of the mounting element 18. The diameter of the remaining part of the compressing element 3 is less than the diameter of said receiving section 5 of the mounting element 18.

The inner surface of the side wall of the mounting element 18 further forms an edge 22 on which the resting element 19 of the compressing element 3 can rest when the compressing element 3 is inserted into the inner volume of the annular mounting element 18 from the thread-sided opening of the mounting element 18, i.e. the opening at the end side of the annular element at which the thread 21 is arranged. The edge 22 provides or is arranged at the transition from the thread section to the receiving section. Thus, the compressing element 3 can be inserted through the thread-sided opening of the mounting element 18 into the inner volume until the resting element 19 contacts the edge 22 and the remaining part of the compressing element 3 is arranged in the receiving section 5. As outlined before, the compressing element 3 and the mounting element 18 can be designed such that a section of the compressing element 3 protrudes from the receiving section 5 of the mounting element 18, i.e. extends beyond the outer end surface of the receiving section, if the resting element 19 contacts the edge 22 and the remaining part of the compressing element 3 is arranged in the receiving section 5. Once the compressing element 3 has been inserted into the mounting element 18, the mounting element 18 is screwed onto the mounting section 20 of the main body 2 thereby mounting the compressing element 3 to the main body 2 without using the means of an adhesive and in a detachable manner. When the described mounting procedure is completed, a free end surface compressing element 3 forms a deformable contact surface 4 for contacting coffee powder 12 during a compressing procedure. Advantageously, the mounting procedure can be reversed so that the individual components, i.e. the main body 2, the compressing element 3 and the mounting element 18, can be separated from each other, for example in order to be able to clean the components in a disassembled state or replace individual components, in particular the compressing element 3.

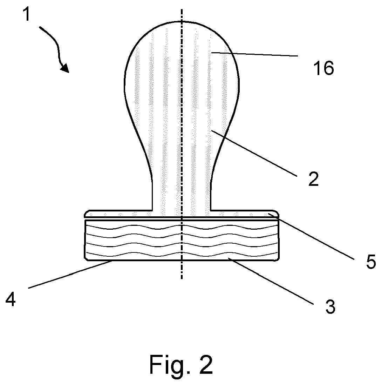

Fig. 2 depicts a sectional view of a further embodiment of a tamping device 1. In this embodiment the main body 2 has a receiving section 5 formed by a flat surface at a free end of the main body 2 which, along a central longitudinal axis of the main body 2, is arranged opposite to the operating section 16. The compressing element 3, in particular an end surface, can be attached, e.g. glued, to the flat surface. In this case, the deformability of the contact surface 4 is less limited by the main body 2 as compared to the embodiment shown in Fig. 1.

In the embodiment according to Fig. 1 and Fig. 1-A, the compressing element 3 is cylindrical and is enclosed on an upper end surface and on the majority of the lateral surface by the stiffer main body 2 or the entity of main body 2 and mounting element 18. In this way, only the deformable lower end surface, i.e. the contact surface 4, of the compressing element 3 remains accessible and can be used to press against the coffee powder 12. The fact that the main body 2 or the entity of main body 2 and mounting element 18 encloses the upper end surface and most of the lateral surface of the compressing element 3 tightly advantageously prevents the pressure from causing the compressing element 3 to bulge during tamping. The only possible deformation is the adaptation of the compressing element 3 to the distribution of the coffee powder 12 or the compacting of the coffee puck.

The embodiment according to Fig. 2 has the advantage that the deformable contact surface 4 of the compressing element 3 covers a larger surface of the coffee powder 12 than the embodiments according to Fig. 1 and Fig. 1-A as in these embodiments, a stiff rim of the enclosure also acts on the coffee powder 12.

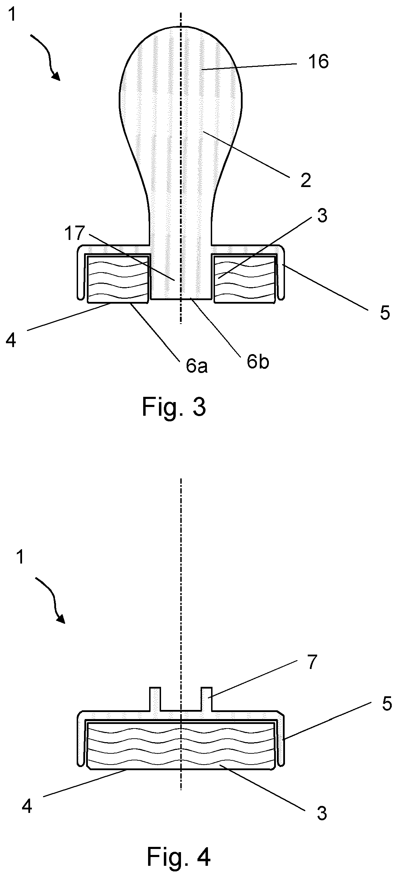

Fig. 3 shows a sectional view of a further embodiment of a tamping device 1. This embodiment of the tamping device 1 comprises a main body 2 with a receiving section 5, wherein the receiving section 5 forms an annular recess for receiving an annular compressing element 3. The annular compressing element 3 forms a first portion 6a of the contact surface 4 of the tamping device 1 which is deformable. A central portion 17 of the main body 2 which extends through the inner volume of the annular compressing element 3 forms a further portion 6b of the contact surface 4. Thus, the first, deformable portion 6a of the contact surface 4 surrounds the further portion 6b. The further portion 6b is less deformable than the first portion 6a of the contact surface 4. This results in the technical effect that a deformation of the first portion 6a of the contact surface 4 during a compression procedure is greater than a deformation of the further portion 6b.

In other words, the compressing element 3 is not formed as a cylinder, but as a ring, which encloses a downward bulge of the main body 2 in its centre. An advantage of this shape is that the piled-up coffee powder 12 is usually mostly elevated towards the centre and the stiffer middle part of the resulting contact surface 4 ensures that the pile-up is levelled, while the surrounding soft and deformable ring ensures a uniform compaction of the remaining puck according to the outlined hydrostatic principle.

However, an embodiment as shown in Fig. 4 is also possible. In Fig. 4, a sectional view of a further embodiment of a tamping device 1 can be seen. This embodiment of the tamping device 1 comprises a main body 2, wherein the main body 2 has a mounting interface 7 for mounting the main body 2 to a compressing device (not shown). In this case, a compression element 3 is located in a receiving section 5, i.e. a holder. The mounting interface 7 can be used in order to attach the tamping device 1 to a mechanical guide. This mechanical guide can, for example, be part of an automatic tamping press. In this way, the advantages of a tamper device 1 according to the invention can also be used for mechanised or automated devices for tamping coffee grounds.

The mounting interface 7 has an annular shape and threaded section on the inside and/or outside of the mounting interface 7 (not shown). The receiving section 5 of the main body 2 can be designed similar to the receiving section 5 of the main body 2 of the tamping device 1 according to the embodiment shown in Fig. 1.

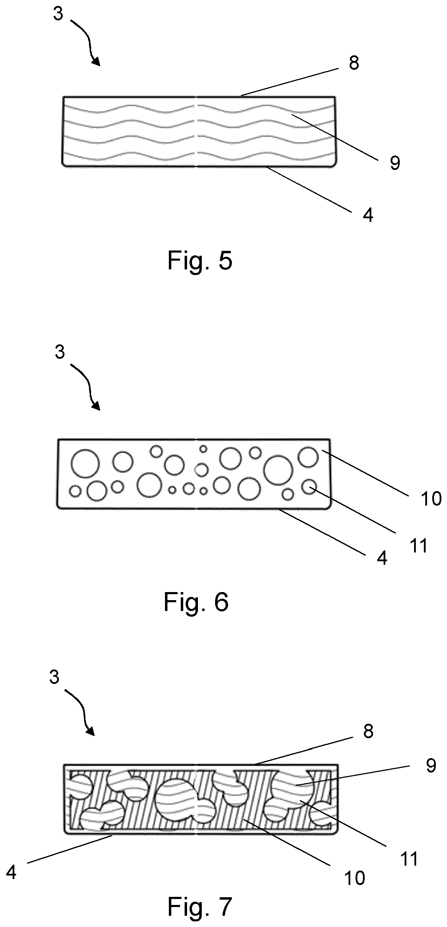

Fig. 5 depicts a sectional view of a cylindrical compressing element 3 as shown in Figs. 1, 2 and 4. The compressing element 3 is a material-filled element and comprises a shell 8. The shell 8 is made from an elastic material impermeable to liquids. An inner volume of the compressing element enclosed by the shell 8 is filled with a liquid material 9. The liquid material 9 can be gel-like in an advantageous embodiment of the compressing element 3.

Fig. 6 is a sectional view of a compressing element 3, wherein the compressing element 3 is made from a deformable solid material 10. The deformable solid material 10 is in particular a foamed material. The foamed material forms cavities 11 (which can also be denoted cells) which are distributed over the volume of the compressing element 3 and reduce the overall stiffness of the solid material 10.

In Fig. 7 a sectional view of a compressing element 3 is shown, in which the compressing element 3 comprises a shell 8. The shell 8 is made from an elastic material impermeable to liquids. An inside of the shell 8 is filled with a solid material 10 such as foam. The foamed material forms cavities 11, which are filled with a liquid material 9. In other words, the solid material 10 is soaked in liquid material 9.

Fig. 8 depicts a sectional view of an embodiment of a tamping device 1 as shown in Fig. 1 the tamping device 1 comprises a main body 2 and a compressing element 3. The compressing element 3 comprises a deformable contact surface 4. The contact surface 4 is used for contacting a coffee powder 12 during a compression procedure. As shown in Fig. 8, the coffee powder 12 is arranged in a receiving device 15, which can be a portafilter or a part thereof. When the coffee powder 12 is heaped into the receiving device 15, it commonly forms an uneven surface. During the compressing procedure, a compression force 14 is applied to a main body 2 of the tamping device 1. When the contact surface 4 comes into contact with the coffee powder 12, the contact surface 4 deforms such that a resulting pressure distribution 13 between the compression element 2 and the uneven surface of the heaped coffee powder 12 is uniform. This results in an advantageous, homogeneous compression of the coffee powder 12 in the receiving device 15 once the compressing procedure is completed. In other words, the density of the coffee powder 12 is approximately uniform throughout the receiving device 15 so that steam and/or water penetrate the compressed coffee powder 12 evenly during a coffee extraction procedure, thereby improving the quality and taste of the resulting coffee.

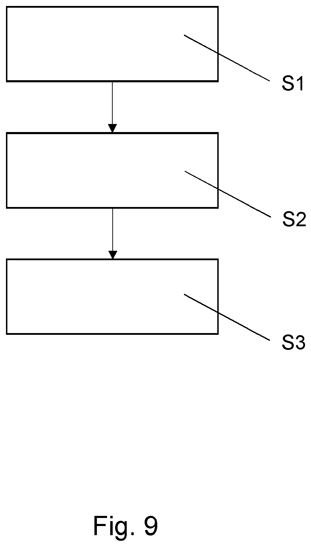

Fig. 9 shows a block diagram of a method for compressing coffee powder 12 with a tamping device 1. In a first step S1, the coffee powder 12 is arranged in a receiving device 15 for receiving the coffee powder 12. In a second step S2, a contact surface 4 of the tamping device 1 is brought into contact with the coffee powder 12. The contact surface 4 can be formed from a first portion 6a and further portion 6b, wherein the first portion 6a is part of a compressing element 3 and the further portion 6b is part of the main body 2. This, however, does not necessarily have to be the case. It is also possible, as e.g. depicted in Fig. 1, that the complete contact surface 4 is provided by the compressing element 3. In a third step S3, a compression force 14 is applied to the tamping device 1 such that the coffee powder 12 is compressed uniformly throughout the receiving device 15. In particular, the first portion 6a or the complete contact surface 4 is deformable such that the application of a compression force 14 to a main body 2 of the tamping device 1 results in a uniform pressure distribution 13 between the contact surface 4 and the coffee powder 12, such as shown in Fig. 8.

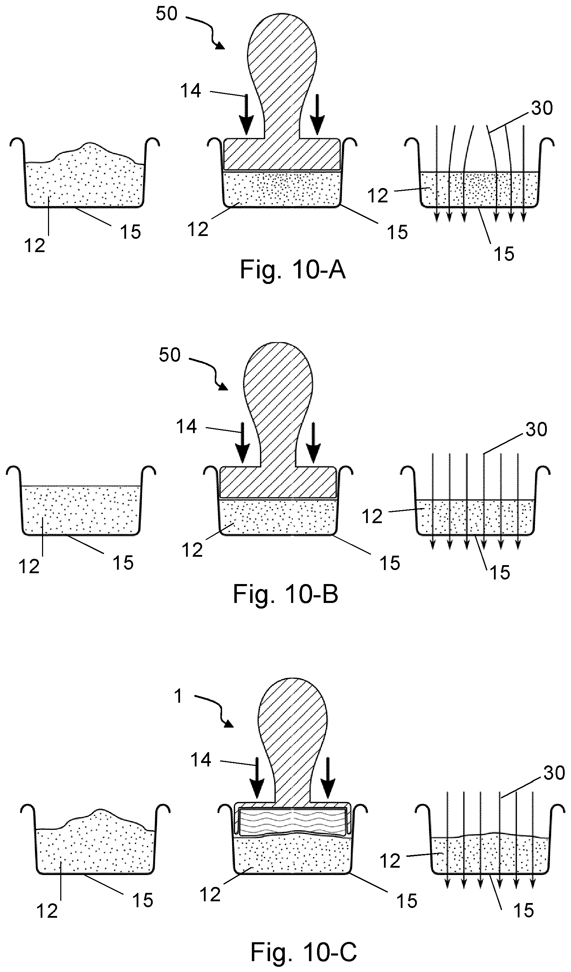

Fig. 10-A is a sectional view of unevenly distributed coffee powder 12 in a receiving device 15. When the coffee powder 12 is heaped into the receiving device 15, it commonly forms an uneven surface. A state of the art tamping device 50 forms a compressing element which is made from a rigid material and the contact surface is non-deformable. When the state of the art tamping device 50 is used for compressing the coffee powder 12, the density of the compressed coffee powder 12 becomes non-uniform, as indicated by the varying density of the dots shown in Fig. 10-A. During a coffee extraction procedure water 30 can permeate only non-uniformly through the compressed coffee powder 12 as indicated by the curved arrows shown in Fig. 10-A.

Fig. 10-B is a sectional view of evenly distributed coffee powder 12 in a receiving device 15. The even or levelled distribution of the coffee powder 12 can be achieved in a preceding step by means of a special tool (not shown). Fig. 10-B further shows a state of the art tamping device 50 compressing the evenly distributed coffee powder 12. Fig. 10-B also depicts the receiving device 15 with compressed coffee powder 12 through which water 30 permeates uniformly during a coffee extraction procedure.

Fig. 10-C is a sectional view of unevenly distributed coffee powder 12 in a receiving device 15. In Fig. 10-C a tamping device 1 with a compressing element 3 according to the invention is used for compressing the coffee powder 12. This makes redundant the aforementioned step of flattening/levelling of the heaped coffee powder 12, e.g. by means of a special tool. The compression by means of the tamping device 1 leads to a uniform density of the compressed coffee powder 12, as indicated by the uniformly distributed dots shown in Fig. 10-C, and water 30 permeates uniformly through the compressed coffee 12 as indicated by the straight and equally spaced arrows shown in Fig. 10-C.

### List of reference marks

- 1: tamping device
- 2: main body
- 3: compressing element
- 4: contact surface
- 5: receiving section
- 6a: first portion
- 6b: further portion
- 7: mounting interface
- 8: shell
- 9: liquid material
- 10: solid material
- 11: cavity
- 12: coffee powder
- 13: uniform pressure distribution
- 14: force
- 15: receiving device
- 16: operating section
- 17: central portion of the main body
- 18: mounting element
- 19: resting element
- 20: mounting section
- 21: female thread
- 22: edge
- 30: water
- 50: state of the art tamping device
- S 1: first step
- S2: second step
- S3: third step
- 100: surroundings

## Claims

1. A tamping device for compressing coffee powder, wherein the tamping device (1) comprises a main body (2) and a compressing element (3), wherein the compressing element (3) is formed by the main body (2) or attached to the main body (2), wherein the compressing element (3) forms or comprises at least a part of a contact surface (4) for contacting the coffee powder (12) during a compressing procedure,
**characterized in that**
at least a first portion (6a) of the contact surface (4) is deformable, wherein a Shore hardness of the deformable portion of the contact surface (4) is lower than or equal to Shore 000 100.

2. The tamping device according to claim 1, **characterized in that** the compressing element (3) is a material-filled element, wherein at least a section of the material-filled element is deformable.

3. The tamping device according to claim 1 or 2, **characterized in that** the compressing element (3) is at least partially made of a liquid material (9).

4. The tamping device according to claim 3, **characterized in that** the liquid material (9) is a gel-like material.

5. The tamping device according to one of the preceding claims, **characterized in that** the compressing element (3) is at least partially or fully made of a deformable solid material (10).

6. The tamping device according to claim 5, **characterized in that** the solid material (10) is a foamed material.

7. The tamping device according to claim 5 or 6, **characterized in that** the solid material (10) is a material impregnated with a liquid material (9).

8. The tamping device according to one of the preceding claims, **characterized in that** different portions (6a, 6b) of the contact surface (4) have different deformation characteristics.

9. The tamping device according to claim 8, **characterized in that** a further portion (6b) of the contact surface (4) is less deformable than the first portion (6a).

10. The tamping device according to claim 9, **characterized in that** the further portion (6b) is provided by a section of the main body (2) or by a section of a mounting element (18) for mounting the compressing element (3) to the main body (2).

11. The tamping device according to one of the preceding claims, **characterized in that** the compressing element (3) is a cylindrical element, an annular element or a cuboid element.

12. The tamping device according to one of the preceding claims, **characterized in that** the main body (2) has a receiving section (5) for receiving the compressing element (3) or at least a part thereof or that a mounting element (18) for mounting the compressing element (3) to the main body (2) is mounted to the main body (2).

13. The tamping device according to one of the preceding claims, **characterized in that** the tamping device (1) has an operating section (16) for a manual operation of the tamping device (1) or a mounting interface (7) for mounting the tamping device (1) to a compressing device.

14. A compressing element for a tamping device (1) for compressing coffee powder,
wherein the compressing element (3) is attachable to a main body (2) of the tamping device (1), wherein the compressing element (3) forms or comprises at least a part of a contact surface (4) for contacting the coffee powder (12) during a compressing procedure,
**characterized in that**
at least a first portion (6a) of the contact surface (4) is deformable, wherein a Shore hardness of the deformable portion of the contact surface (4) is lower than or equal to Shore 000 100.

15. A method for compressing coffee powder with a tamping device (1) according to one of the claims 1 to 14, **characterized in that** the method comprises the steps of
- arranging coffee powder (12) in a receiving device (15) for receiving coffee powder (12),
- contacting the coffee powder (12) with the contact surface (4) of the tamping device (1),
- applying a compressing force (14) on the tamping device (1) such that the coffee powder (12) is compressed.

## Patentansprüche

1. Stopfvorrichtung (1) zum Verdichten von Kaffeepulver, wobei die Stopfvorrichtung (1) einen Grundkörper (2) und ein Verdichtungselement (3) umfasst, wobei das Verdichtungselement (3) durch den Grundkörper (2) gebildet oder an diesem befestigt ist, wobei das Verdichtungselement (3) zumindest einen Teil einer Kontaktfläche (4) zum Kontaktieren des Kaffeepulvers (12) während eines Verdichtungsvorgangs bildet oder umfasst,
**dadurch gekennzeichnet,**
**dass** zumindest ein erster Abschnitt (6a) der Kontaktfläche (4) verformbar ist, wobei die Shore-Härte des verformbaren Abschnitts der Kontaktfläche (4) kleiner oder gleich Shore 000 100 ist.

2. Stopfvorrichtung nach Anspruch 1, **dadurch gekennzeichnet, dass** das Verdichtungselement (3) ein materialgefülltes Element ist, wobei zumindest ein Abschnitt des materialgefüllten Elements verformbar ist.

3. Stopfvorrichtung nach Anspruch 1 oder 2, **dadurch gekennzeichnet, dass** das Verdichtungselement (3) zumindest teilweise aus einem flüssigen Material (9) besteht.

4. Stopfvorrichtung nach Anspruch 3, **dadurch gekennzeichnet, dass** das flüssige Material (9) ein gelartiges Material ist.

5. Stopfvorrichtung nach einem der vorhergehenden Ansprüche, **dadurch gekennzeichnet, dass** das Verdichtungselement (3) zumindest teilweise oder vollständig aus einem verformbaren festen Material (10) besteht.

6. Stopfvorrichtung nach Anspruch 5, **dadurch gekennzeichnet, dass** das feste Material (10) ein geschäumtes Material ist.

7. Stopfvorrichtung nach Anspruch 5 oder 6, **dadurch gekennzeichnet, dass** das feste Material (10) ein mit einem flüssigen Material (9) imprägniertes Material ist.

8. Stopfvorrichtung nach einem der vorhergehenden Ansprüche, **dadurch gekennzeichnet, dass** unterschiedliche Abschnitte (6a, 6b) der Kontaktfläche (4) unterschiedliche Verformungseigenschaften aufweisen.

9. Stopfvorrichtung nach Anspruch 8, **dadurch gekennzeichnet, dass** ein weiterer Abschnitt (6b) der Kontaktfläche (4) weniger verformbar ist als der erste Abschnitt (6a).

10. Stopfvorrichtung nach Anspruch 9, **dadurch gekennzeichnet, dass** der weitere Abschnitt (6b) durch einen Abschnitt des Grundkörpers (2) oder durch einen Abschnitt eines Befestigungselements (18) bereitgestellt ist, das zur Befestigung des Verdichtungselements (3) am Grundkörper (2) dient.

11. Stopfvorrichtung nach einem der vorhergehenden Ansprüche, **dadurch gekennzeichnet, dass** das Verdichtungselement (3) ein zylindrisches, ringförmiges oder quaderförmiges Element ist.

12. Stopfvorrichtung nach einem der vorhergehenden Ansprüche, **dadurch gekennzeichnet, dass** der Grundkörper (2) einen Aufnahmeraum (5) zum Aufnehmen des Verdichtungselements (3) oder eines Teils davon aufweist oder dass ein Befestigungselement (18) zur Befestigung des Verdichtungselements (3) am Grundkörper (2) am Grundkörper (2) angebracht ist.

13. Stopfvorrichtung nach einem der vorhergehenden Ansprüche, **dadurch gekennzeichnet, dass** die Stopfvorrichtung (1) einen Betätigungsabschnitt (16) zum manuellen Betätigen der Stopfvorrichtung (1) oder eine Befestigungsschnittstelle (7) zum Anbringen der Stopfvorrichtung (1) an einer Verdichtungsvorrichtung aufweist.

14. Verdichtungselement für eine Stopfvorrichtung (1) zum Verdichten von Kaffeepulver, wobei das Verdichtungselement (3) an einem Grundkörper (2) der Stopfvorrichtung (1) befestigbar ist, wobei das Verdichtungselement (3) zumindest einen Teil einer Kontaktfläche (4) zum Kontaktieren des Kaffeepulvers (12) während eines Verdichtungsvorgangs bildet oder umfasst,
**dadurch gekennzeichnet,**
**dass** zumindest ein erster Abschnitt (6a) der Kontaktfläche (4) verformbar ist, wobei die Shore-Härte des verformbaren Abschnitts der Kontaktfläche (4) kleiner oder gleich Shore 000 100 ist.

15. Verfahren zum Verdichten von Kaffeepulver mit einer Stopfvorrichtung (1) nach einem der Ansprüche 1 bis 14, **dadurch gekennzeichnet, dass** das Verfahren die Schritte umfasst:
- Einbringen von Kaffeepulver (12) in eine Aufnahmevorrichtung (15) zum Aufnehmen von Kaffeepulver (12);
- Kontaktieren des Kaffeepulvers (12) mit der Kontaktfläche (4) der Stopfvorrichtung (1); und
- Ausüben einer Verdichtungskraft (14) auf die Stopfvorrichtung (1), sodass das Kaffeepulver (12) verdichtet wird.

## Revendications

1. Dispositif de tassage (1) pour comprimer de la poudre de café, ledit dispositif de tassage (1) comprenant un corps principal (2) et un élément de compression (3), l'élément de compression (3) étant formé par le corps principal (2) ou fixé à celui-ci, l'élément de compression (3) formant ou comprenant au moins une partie d'une surface de contact (4) destinée à venir en contact avec la poudre de café (12) pendant une opération de compression,
**caractérisé en ce que**
au moins une première portion (6a) de la surface de contact (4) est déformable, la dureté Shore de la portion déformable de la surface de contact (4) étant inférieure ou égale à Shore 000 100.

2. Dispositif de tassage selon la revendication 1, **caractérisé en ce que** l'élément de compression (3) est un élément rempli de matériau, dont au moins une partie est déformable.

3. Dispositif de tassage selon la revendication 1 ou 2, **caractérisé en ce que** l'élément de compression (3) est au moins partiellement constitué d'un matériau liquide (9).

4. Dispositif de tassage selon la revendication 3, **caractérisé en ce que** le matériau liquide (9) est un matériau gélifié.

5. Dispositif de tassage selon l'une quelconque des revendications précédentes, **caractérisé en ce que** l'élément de compression (3) est au moins partiellement ou entièrement constitué d'un matériau solide déformable (10).

6. Dispositif de tassage selon la revendication 5, **caractérisé en ce que** le matériau solide (10) est un matériau mousseux.

7. Dispositif de tassage selon la revendication 5 ou 6, **caractérisé en ce que** le matériau solide (10) est un matériau imprégné d'un matériau liquide (9).

8. Dispositif de tassage selon l'une quelconque des revendications précédentes, **caractérisé en ce que** différentes portions (6a, 6b) de la surface de contact (4) présentent des caractéristiques de déformation différentes.

9. Dispositif de tassage selon la revendication 8, **caractérisé en ce qu'**une autre portion (6b) de la surface de contact (4) est moins déformable que la première portion (6a).

10. Dispositif de tassage selon la revendication 9, **caractérisé en ce que** l'autre portion (6b) est constituée par une section du corps principal (2) ou par une section d'un élément de fixation (18) destiné à fixer l'élément de compression (3) au corps principal (2).

11. Dispositif de tassage selon l'une quelconque des revendications précédentes, **caractérisé en ce que** l'élément de compression (3) est un élément cylindrique, annulaire ou cuboïde.

12. Dispositif de tassage selon l'une quelconque des revendications précédentes, **caractérisé en ce que** le corps principal (2) comprend une section de réception (5) destinée à recevoir l'élément de compression (3) ou une partie de celui-ci, ou **en ce qu'**un élément de fixation (18) destiné à fixer l'élément de compression (3) au corps principal (2) est monté sur le corps principal (2).

13. Dispositif de tassage selon l'une quelconque des revendications précédentes, **caractérisé en ce que** le dispositif de tassage (1) comprend une section de commande (16) pour une commande manuelle du dispositif de tassage (1) ou une interface de fixation (7) pour fixer le dispositif de tassage (1) à un dispositif de compression.

14. Élément de compression pour un dispositif de tassage (1) destiné à comprimer de la poudre de café, l'élément de compression (3) étant fixable à un corps principal (2) du dispositif de tassage (1), l'élément de compression (3) formant ou comprenant au moins une partie d'une surface de contact (4) destinée à venir en contact avec la poudre de café (12) pendant une opération de compression,
**caractérisé en ce que**
au moins une première portion (6a) de la surface de contact (4) est déformable, la dureté Shore de la portion déformable de la surface de contact (4) étant inférieure ou égale à Shore 000 100.

15. Procédé de compression de poudre de café au moyen d'un dispositif de tassage (1) selon l'une quelconque des revendications 1 à 14, **caractérisé en ce que** le procédé comprend les étapes suivantes :
- disposer la poudre de café (12) dans un dispositif de réception (15) destiné à recevoir la poudre de café (12) ;
- mettre en contact la poudre de café (12) avec la surface de contact (4) du dispositif de tassage (1) ; et
- appliquer une force de compression (14) sur le dispositif de tassage (1) de manière à comprimer la poudre de café (12).
